# EUROPEAN PATENT APPLICATION

(11) **EP 4 744 925 A1**
(43) Date of publication of application: **20.05.2026**
(21) Application number: 25215754.0
(22) Date of filing: 14.11.2025
(51) Int. Cl.: B60K 1/04

(54) **ELECTRIC WORK VEHICLE**

(30) Priority: 15.11.2024 JP 2024199710
(71) Applicant: Kubota Corporation, Osaka 556-8601 (JP)
(72) Inventor: ONO, Kohei, SAKAI-SHI, OSAKA, 5900908 (JP); INOUE, Yuta, SAKAI-SHI, OSAKA, 5900908 (JP)
(74) Representative: Cabinet Beau de Loménie

(57) **Abstract**

An electric work vehicle (10) includes a vehicle body (11), a driving unit (13) mounted on the vehicle body (11), a battery (26) disposed in front of the driving unit (13), and a battery frame (56) that supports the battery (26) and is mounted on the vehicle body (11), in which the driving unit (13) includes a steering wheel (37) and a power steering device (38) that is connected to the steering wheel (37) and assists an operation of the steering wheel (37), and the battery frame (56) includes an attachment portion (80) for mounting the power steering device (38).

## Description

### TECHNICAL FIELD

The present disclosure relates to an electric work vehicle. The present application claims priority based on Japanese Patent Application No. 2024-199710 filed on November 15, 2024, the entire contents of which are incorporated herein by reference and to which the person of the art can refer when considering the present disclosure.

### BACKGROUND ART

Patent Literature 1 discloses an electric work vehicle (electric tractor) that travels and performs predetermined work by driving an electric motor. The electric work vehicle includes a machine body (vehicle body) supported by left and right front wheels and rear wheels, and a driving unit mounted on the machine body, and a steering wheel and a power steering mechanism are provided at a front portion of the driving unit. The power steering mechanism is attached to a pillar frame rising upward from the machine body. On a front side of the pillar frame, a battery is mounted on the machine body.

### CITATION LIST

### [PATENT LITERATURE]

PATENT LITERATURE 1: Japanese Laid-Open Patent Publication No. 2024-47246

### SUMMARY OF THE INVENTION

### [TECHNICAL PROBLEM]

The electric work vehicle described in Patent Literature 1 requires a pillar frame in order to provide a power steering mechanism. However, due to the presence of the pillar frame, the machine body becomes long in a front-rear direction, and downsizing of the electric work vehicle is hindered.

An object of the present disclosure is to make an electric work vehicle compact.

### [SOLUTION TO PROBLEM]

An electric work vehicle according to the present disclosure includes:
a vehicle body;
a driving unit mounted on the vehicle body;
a battery disposed in front of the driving unit; and
a battery frame that supports the battery and is mounted on the vehicle body, in which
the driving unit includes a steering wheel and a power steering device that is connected to the steering wheel and assists an operation of the steering wheel, and
the battery frame includes an attachment portion for mounting the power steering device.

### [ADVANTAGEOUS EFFECTS OF THE INVENTION]

According to the present disclosure, an electric work vehicle can be made compact.

### BRIEF DESCRIPTION OF DRAWINGS

FIG. 1 is a side view of an electric work vehicle.
FIG. 2 is a side view schematically illustrating a support structure of a battery.
FIG. 3 is a cross-sectional view taken along line A-A in FIG. 2.
FIG. 4 is an exploded perspective view of a battery, a battery frame, and a power steering device.
FIG. 5 is a cross-sectional view taken along line B-B in FIG. 2.
FIG. 6 is a block diagram illustrating an example of a configuration of the electric work vehicle.

### DETAILED DESCRIPTION

### <Outline of Embodiment of Present Disclosure>

Hereinafter, an outline of embodiments of the present disclosure will be listed and described.
(1) An electric work vehicle according to the present embodiment includes:
   a vehicle body;
   a driving unit mounted on the vehicle body;
   a battery disposed in front of the driving unit; and
   a battery frame that supports the battery and is mounted on the vehicle body, in which
   the driving unit includes a steering wheel and a power steering device that is connected to the steering wheel and configured to assist an operation of the steering wheel, and
   the battery frame includes an attachment portion for mounting the power steering device.
      According to the above configuration, since the power steering device is attached to the attachment portion of the battery frame, a conventional pillar frame is unnecessary, and accordingly, the electric work vehicle can be made compact in the front-rear direction.
(2) In an embodiment of the electric work vehicle according to (1), the battery frame includes a rear support portion disposed on a rear side of the battery, and
   the attachment portion protrudes rearward from the rear support portion.
(3) In an embodiment of the electric work vehicle according to (2), the attachment portion is located above a lower end of the battery frame.
   According to this configuration, it is possible to form a space below the attachment portion, and it is possible to secure a wide space around the driver's foot by this space or to arrange other parts.
(4) In an embodiment of the electric work vehicle according to any one of (1) to (3), the driving unit includes a meter panel, and
   the battery frame includes a second attachment portion for attaching the meter panel.
   According to this configuration, not only the power steering device but also the meter panel provided in the driving unit can be attached using the battery frame.
(5) In an embodiment of the electric work vehicle according to (4), the second attachment portion is provided above the attachment portion.
(6) In an embodiment of the electric work vehicle according to any one of (1) to (5), the battery frame includes a partition plate that partitions a front end of the driving unit.
(7) In an embodiment of the electric work vehicle according to any one of (1) to (6), the battery frame includes a frame member facing a side surface of the battery with a gap, and a buffer member configured to be compressed by relative movement of the battery and the frame member in a facing direction.
   According to this configuration, vibration of the electric work vehicle can be absorbed by the buffer member, and transmission of the vibration to the battery can be suppressed.
(8) In an embodiment of the electric work vehicle according to (7), the buffer member is disposed on an outer surface of the frame member, and
   the battery frame includes a fixing member fixed to the battery with the buffer member sandwiched between the fixing member and the frame member.

### <Details of Embodiment of Present Disclosure>

Hereinafter, embodiments of the present disclosure will be described in detail with reference to the drawings.

### [Overall Configuration of Electric Work Vehicle]

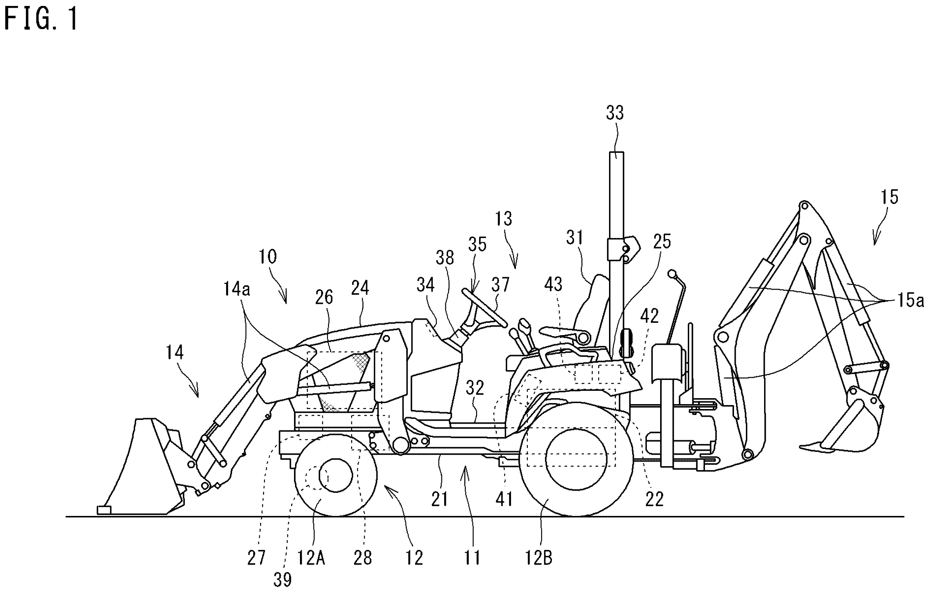

FIG. 1 is a side view of an electric work vehicle. Note that, in the present specification, a direction in which an electric work vehicle 10 moves forward is defined as front, a direction in which the electric work vehicle 10 moves backward is defined as back, a left side of the electric work vehicle 10 facing forward is defined as left, and a right side of the electric work vehicle 10 facing forward is defined as right.

As illustrated in FIG. 1, an electric work vehicle 10 of the present embodiment is a vehicle used for farmwork, specifically, a tractor. However, the electric work vehicle 10 is not limited to the tractor, and may be a mobile object such as an agricultural machine, a construction machine, or a utility vehicle.

As illustrated in FIG. 1, the electric work vehicle 10 includes a vehicle body 11, a traveling device 12, a driving unit 13, and working devices 14 and 15. The vehicle body 11 includes a machine body frame 21 and a transmission case 22. The machine body frame 21 is formed to be long in a front-rear direction so as to extend substantially over the entire vehicle body 11 in the front-rear direction. The machine body frame 21 is configured by, for example, connecting a belt-shaped plate material or the like in a frame shape. The transmission case 22 is disposed at a rear portion of the machine body frame 21.

The vehicle body 11 includes a hood 24 and left and right rear wheel fenders 25. The hood 24 covers equipment disposed at a front portion of the machine body frame 21. The devices are, for example, a battery 26, an inverter 27, and an electric motor 28. The rear wheel fenders 25 are mudguards that cover outer peripheries of the left and right rear wheels 12B described later, mainly upper sides of the rear wheels 12B.

The traveling device 12 supports the vehicle body 11 in a travelable manner. The traveling device 12 includes left and right front wheels 12A and left and right rear wheels 12B which are traveling wheels. The front wheels 12A and the rear wheels 12B are annular tires. The left and right front wheels 12A are attached to a front axle case supported by the front portion of the machine body frame 21. The left and right rear wheels 12B are attached to rear axle cases protruding from left and right sides of the transmission case 22. The front wheels 12A and the rear wheels 12B are driven by the electric motor 28. The front wheels 12A and the rear wheels 12B are not limited to tires, and may be other forms such as crawlers.

The driving unit 13 is disposed on the vehicle body 11. The driving unit 13 includes an driver's seat 31, an operation floor 32, a rollover protection structure (ROPS) frame 33, a meter panel 34, an operation device 35, and the like. The driver's seat 31 is disposed above the transmission case 22. The driver's seat 31 is a part on which a driver sits to drive or operate the electric work vehicle 10. The driver's seat 31 is disposed between the left and right rear wheel fenders 25.

The operation floor 32 is disposed in front of the driver's seat 31 and on the machine body frame 21. The operation floor 32 is a portion on which the driver sitting on the driver's seat 31 places his/her foot. The operation floor 32 is provided with an operation pedal (not illustrated) and the like that can be operated by the foot of the driver sitting on the driver's seat 31.

The ROPS frame 33 extends upward from the rear end of the machine body frame 21. The ROPS frame 33 is formed in a gate shape (downward U-shape) in a front view, and a lower end thereof is connected to the machine body frame 21. The ROPS frame 33 is disposed on the rear side of the driver's seat 31 and protects the driver sitting on the driver's seat 31. The driving unit 13 may include a cabin that covers the driver's seat 31, the operation floor 32, and the like instead of the ROPS frame 33.

The operation device 35 includes a steering wheel 37 and a power steering device 38. The steering wheel 37 is disposed in front of the driver's seat 31 and above the operation floor 32. The steering wheel 37 is formed in an annular shape and rotates around a central axis to operate the direction of the front wheels 12A in a left-right direction. The steering wheel 37 is connected to an upper end of the power steering device 38. The power steering device 38 of the present embodiment is a hydraulic control unit for controlling a hydraulic cylinder 39 for steering that assists the steering force of the front wheels 12A, and switches the flow path of the pressure oil to the hydraulic cylinder 39 by operation of the steering wheel 37. The meter panel 34 is disposed in front of the steering wheel 37. The meter panel 34 includes a speed meter, a remaining battery meter, and the like.

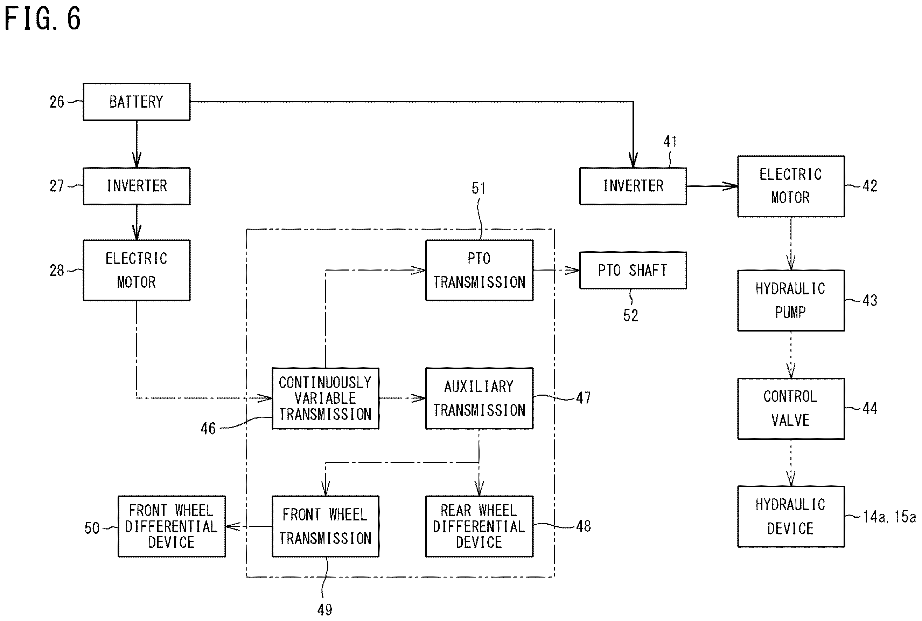

FIG. 6 is a block diagram illustrating an example of a configuration of the electric work vehicle. In FIG. 6, a solid arrow indicates a power supply system, arrows of one-dot chain lines indicate a power transmission system, and arrows of dotted lines indicate a hydraulic supply system.

The electric work vehicle 10 includes the battery 26, inverters 27 and 41, and electric motors 28 and 42. The battery 26 is a secondary battery, and is configured to be chargeable by a charging facility such as a charging stand. The inverters 27 and 41 convert DC power emitted from the battery 26 into AC power. The electric motors 28 and 42 are operated by electric power supplied from the inverters 27 and 41.

The electric work vehicle 10 of the present embodiment includes two inverters 27 and 41 and two electric motors 28 and 42.

The one electric motor 28 is an electric motor of a traveling system, operates by power supplied from one inverter 27, and transmits power to a continuously variable transmission 46 provided in the transmission case 22. The continuously variable transmission 46 is, for example, a hydrostatic transmission (HST). The continuously variable transmission 46 is steplessly shiftable forward and backward, and is operated by a shift pedal (not illustrated) provided on the operation floor 32.

The output of the continuously variable transmission 46 is transmitted to a rear wheel differential device 48 via an auxiliary transmission 47 to rotationally drive the rear wheels 12B. Further, the output of the continuously variable transmission 46 is transmitted to a front wheel differential device 50 via the auxiliary transmission 47 and a front wheel transmission 49 to rotationally drive the front wheels 12A.

The power of the electric motor 28 that has passed through the continuously variable transmission 46 is transmitted to a PTO shaft 52 via a PTO transmission 51. The PTO shaft 52 transmits power to a working device such as a tiller or a seeder connected to a three-point link mechanism provided at the rear portion of the vehicle body 11. Thus, the electric motor 28 is also a PTO electric motor.

The other electric motor 42 is an electric motor of a hydraulic work system, and is operated by power supplied from the other inverter 41. The electric motor 42 drives a hydraulic pump 43. As illustrated in FIG. 1, the electric motor 42, the inverter 41, and the hydraulic pump 43 are arranged above one (left) of the left and right rear wheels 12B, and are covered from above by the rear wheel fender 25.

The hydraulic pump 43 compresses hydraulic oil and supplies the hydraulic oil to hydraulic devices 14a and 15a via a control valve 44. The electric work vehicle 10 of the present embodiment constitutes a so-called tractor loader backhoe (TLB), and a front loader 14 is attached to a front portion of the vehicle body 11 and the backhoe 15 is attached to the rear portion of the vehicle body 11. The front loader 14 includes a plurality of hydraulic cylinders (hydraulic devices) 14a for rotating a bucket and swinging a boom. The backhoe 15 includes a plurality of hydraulic cylinders (hydraulic devices) 15a for rotating the bucket and swinging the boom and the arm. The hydraulic devices each also include a lifting device that moves up and down the three-point link mechanism, the hydraulic cylinder for power steering that assists steering of the front wheels 12A, and the like.

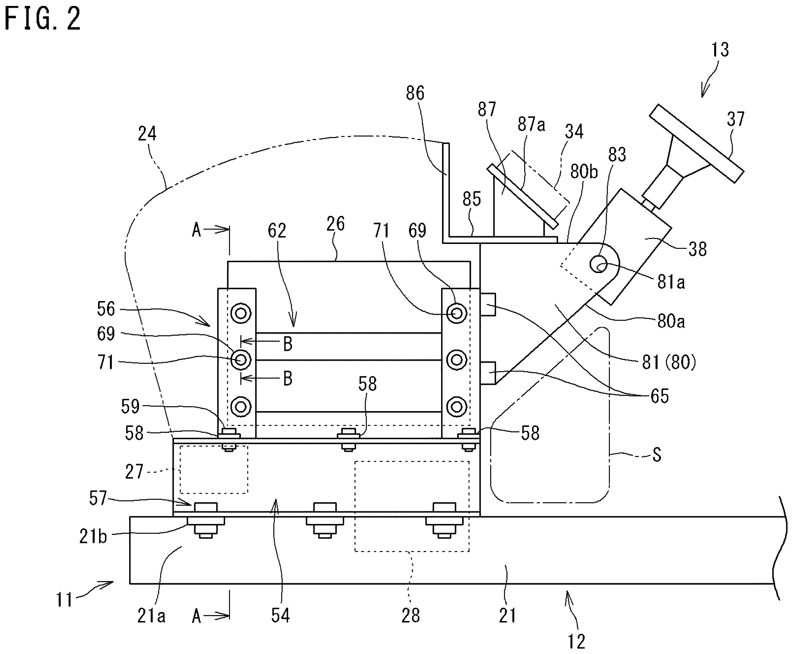

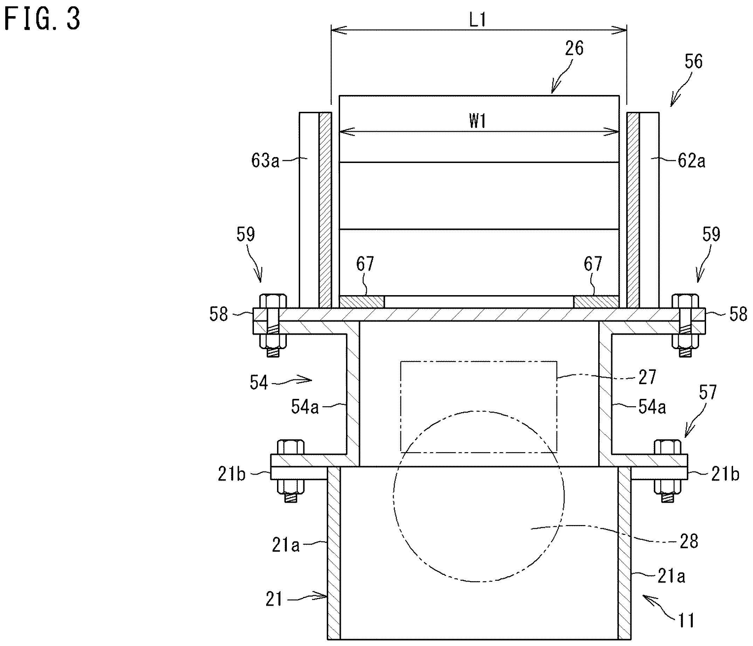

FIG. 2 is a side view schematically illustrating a support structure of a battery. FIG. 3 is a cross-sectional view taken along line A-A in FIG. 2.

As illustrated in FIG. 2 and FIG. 3, the battery 26 is configured by stacking a plurality of battery modules vertically. The battery 26 is formed in a substantially rectangular parallelepiped shape as a whole. The battery 26 is disposed at a front portion of the machine body frame 21 in the vehicle body 11. Specifically, the vehicle body 11 includes an attachment frame 54 placed on a front portion of the machine body frame 21, and the battery 26 is disposed on the attachment frame 54. The battery 26 is supported by a battery frame 56. The battery 26 and the battery frame 56 are arranged substantially at the center of the vehicle body 11 in the left-right direction.

The machine body frame 21 includes a pair of left and right side plate members 21a. Each of the side plate members 21a is formed in a band plate shape elongated in the front-rear direction, and is disposed with a plate surface facing the left-right direction. The attachment frame 54 also includes a pair of left and right side plate members 54a. Each side plate member 54a is formed in a substantially C shape in front view. The side plate member 54a is placed on an attachment piece 21b provided at an upper end of the side plate member 21a, and is fixed to the side plate member 21a by a fastener 57 including a bolt, a nut, and the like.

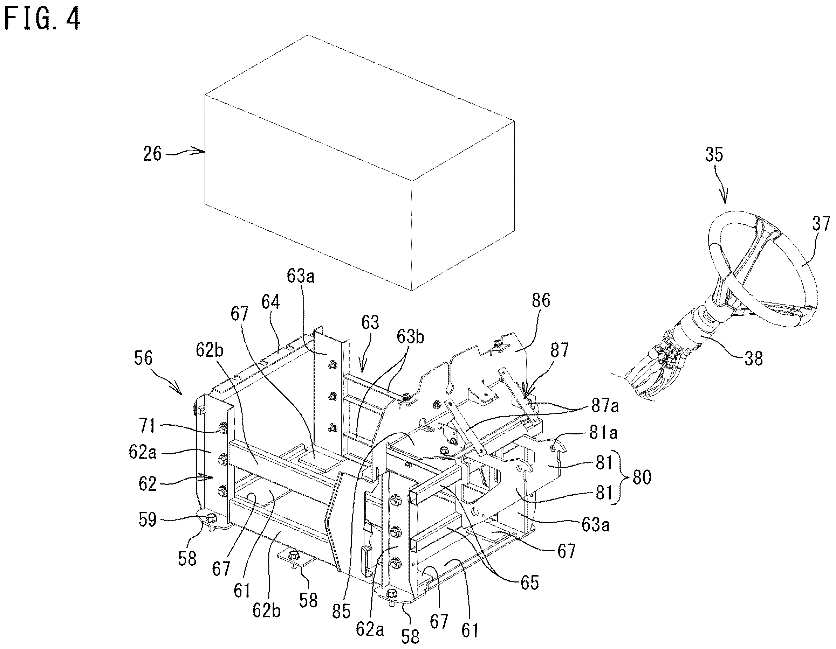

FIG. 4 is an exploded perspective view of the battery, the battery frame, and the power steering device.

The battery frame 56 supports the battery 26 in the front-rear direction, the left-right direction, and from below. The battery frame 56 is formed in a substantially rectangular parallelepiped box shape. The upper side of the battery frame 56 is open. The battery 26 is inserted into the battery frame 56 from above. Alternatively, the battery 26 is inserted into the battery frame 56 from the side thereof by removing front and rear or left and right sidewalls of the battery frame 56.

Attachment pieces 58 protruding in the left-right direction are provided at lower ends of left and right sidewalls of the battery frame 56. As illustrated in FIG. 3, the attachment piece 58 is attached to the attachment frame 54 fixed on the machine body frame 21. The attachment piece 58 is placed on the upper surface of the side plate member 54a of the attachment frame 54, and is fixed to the side plate member 54a by a fastener 59 including a bolt, a nut, and the like.

Note that, as illustrated in FIG. 2, the traveling/PTO inverter 27 is disposed inside the attachment frame 54. The inverter 27 is disposed below the battery 26 and the battery frame 56. The traction/PTO system electric motor 28 is disposed within the attachment frame 54 and/or within the machine body frame 21. The electric motor 28 is disposed below the battery 26 and the battery frame 56. As illustrated in FIG. 3, the inverter 27 and the electric motor 28 are arranged substantially at the center of the vehicle body 11 in the left-right direction.

As illustrated in FIG. 4, the battery frame 56 includes a plurality of frame members 61 to 65 constituting a bottom wall and a sidewall. Specifically, the battery frame 56 includes bottom frame members 61, a left frame member 62, a right frame member 63, a front frame member 64, and a rear frame member 65. The bottom frame members 61, the left frame member 62, the right frame member 63, the front frame member 64, and the rear frame member 65 constitute support portions that support the battery 26 from a lower side, a left side, a right side, a front side, and a rear side, respectively.

The bottom frame members 61 are disposed on both a lower side of a front side and a lower side of a rear side of the battery 26, and supports the battery 26 from below. The front and rear bottom frame members 61 are each formed in a band plate shape. Left and right ends of the bottom frame members 61 constitute the above-described attachment piece 58.

Buffer members 67 are attached to both left and right sides of an upper surface of each bottom frame member 61. The buffer members 67 are elastic members formed of rubber, synthetic resin, or the like. The battery 26 is placed on the buffer member 67 provided on each bottom frame member 61, and the buffer member 67 absorbs vibration and impact from below and suppresses transmission to the battery 26.

The left frame member 62 of the battery frame 56 includes front and rear supports 62a disposed adjacent to a front side and a rear side of a left side surface of the battery 26, and side members 62b connecting the front and rear supports 62a. The right frame member 63 of the battery frame 56 includes front and rear supports 63a disposed adjacent to a front side and a rear side of a right side surface of the battery 26, and side members 63b connecting the front and rear supports 63a.

Each of the supports 62a and 63a is formed of a member elongated in the vertical direction, and is formed by, for example, bending a plate material into a substantially C shape in top view. The supports 62a and 63a face the left and right side surfaces of battery 26, and are arranged substantially parallel to the side surfaces. Each of the side members 62b and 63b is formed of a member elongated in the front-rear direction, and is formed by, for example, bending a plate material into a substantially C shape in front view. The side members 62b and 63b are bridged between a lower side and an upper side of the front and rear supports 62a and 63a.

The front frame member 64 of the battery frame 56 is made of a member elongated in the left-right direction, and is formed by, for example, bending a plate material into a substantially L shape in a side view. The front frame member 64 is bridged between upper ends of the supports 62a and 63a on a front side of the left frame member 62 and the right frame member 63.

The rear frame member 65 of the battery frame 56 is formed of a member elongated in the left-right direction, and is formed of, for example, a square pipe. The rear frame member 65 is bridged between upper ends of the supports 62a and 63a on a rear side of the left frame member 62 and the right frame member 63 and between upper and lower intermediate portions.

In the battery frame 56, a bottom wall and front, rear, left, and right sidewalls are formed of a plurality of frame members 61 to 65, so that openings are formed in the bottom wall and the sidewalls. This makes it possible to reduce the weight of the battery frame 56 and improve the heat dissipation of the battery 26.

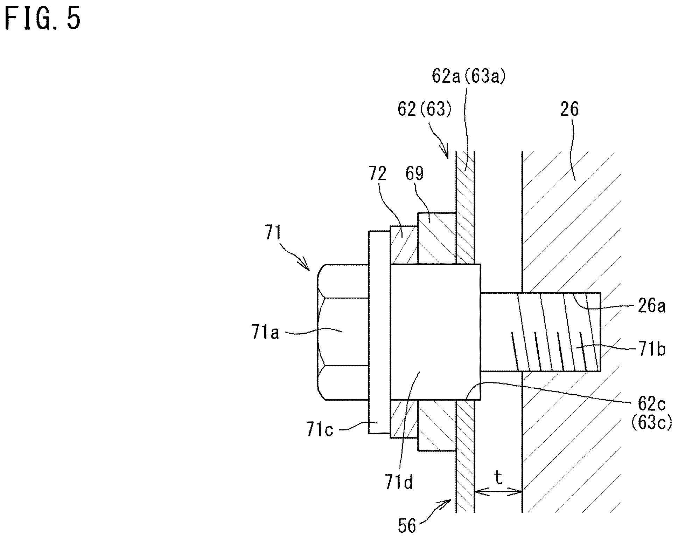

FIG. 5 is a cross-sectional view taken along line B-B in FIG. 2.

The battery 26 is supported on the bottom frame members 61 of the battery frame 56 via the buffer members 67, and is also supported on the left frame member 62 and the right frame member 63 via a buffer member 69. Specifically, the battery 26 and the battery frame 56 are connected by a connection bolt 71, and the buffer member 69 is attached to the connection bolt 71.

As illustrated in FIG. 3, a distance L1 between the left and right frame members 62 and 63 in the battery frame 56 is larger than a width W1 of the battery 26 in the left-right direction. As also illustrated in FIG. 5, the left and right frame members 62 and 63 (supports 62a and 63a) of the battery frame 56 are arranged to face the side surface of the battery 26 with a gap t therebetween.

The connection bolt 71 includes a head portion 71a disposed on one end (left end in FIG. 5) side, a male screw portion 71b disposed on the other end (right end in FIG. 5) side, a flange portion 71c and a large-diameter shaft portion 71d disposed between the head portion 71a and the male screw portion 71b.

The head portion 71a of the connection bolt 71 has a hexagonal outer peripheral surface with which a tool such as a wrench can be engaged. The male screw portion 71b has a columnar shape, and a male screw is formed on an outer peripheral surface thereof. The flange portion 71c is disposed adjacent to the head portion 71a.

The flange portion 71c of the connection bolt 71 is formed in a disk shape and protrudes radially outward from the head portion 71a. The large-diameter shaft portion 71d is disposed between the flange portion 71c and the male screw portion 71b. The large-diameter shaft portion 71d has a columnar shape having a larger diameter than the male screw portion 71b and a smaller diameter than the flange portion 71c.

An annular washer 72 and an annular buffer member 69 are fitted to an outer peripheral surface of the large-diameter shaft portion 71d. Through holes 62c and 63c into which the large-diameter shaft portion 71d of the connection bolt 71 can be inserted are formed in the supports 62a and 63a. On a side surface of the battery 26 facing the supports 62a and 63a, a female screw hole 26a to which the male screw portion 71b of the connection bolt 71 can be fastened is formed.

When the large-diameter shaft portion 71d of the connection bolt 71 is inserted into the through hole 62c and the male screw portion 71b is fastened to the female screw hole 26a, the washer 72 and the buffer member 69 are arranged between the outer surface of the support 62a and the flange portion 71c of the connection bolt 71. Thus, when the battery 26 moves in the direction in which the gap t with the support 62a expands (the right direction in FIG. 5), the buffer member 69 is compressed and absorbs vibration and impact associated with the movement.

Since the battery 26 is connected to the left and right frame members 62 and 63 by the connection bolts 71 on the left and right side surfaces, the buffer member 69 absorbs impact and vibration even if the battery 26 moves in either the left or right direction.

As described above, the battery frame 56 of the present embodiment includes the frame members 62 and 63 facing the side surfaces of the battery 26 with the gap t, and the buffer member 69 to be compressed by the relative movement of the battery frame 56 and the battery 26 in the facing direction (left-right direction). Further, the buffer member 69 is disposed on the outer surface of each of the frame members 62 and 63, and the battery frame 56 includes a fixing member (connection bolt) 71 fixed to the battery 26 with the buffer member 69 sandwiched between the fixing member 71 and each of the frame members 62 or 63.

Since the battery 26 is supported by the battery frame 56 via the buffer members 67 and 69, it is possible to suppress transmission of vibration associated with traveling or work of the electric work vehicle 10 from the battery frame 56 to the battery 26, and it is possible to suppress damage to the battery 26. Further, when the battery 26 is not connected to the battery frame 56 via the buffer members 67 and 69, it is necessary to firmly connect them using a large number of bolts or the like so that they do not move relative to each other, but the number of connection bolts 71 can be reduced by interposing the buffer members 67 and 69 between them as in the present embodiment.

Since the connection bolt 71 can be inserted into the battery frame 56 from the outside without receiving loads in the vertical direction and the horizontal direction and connected (fastened) to the battery 26, connecting work to the battery 26 can be easily performed.

The buffer member 69 may be provided between the battery 26 and the front frame member 64 and the rear frame member 65 of the battery frame 56, and the buffer member 69 may absorb impact and vibration due to movement of the battery 26 in the front-rear direction.

As illustrated in FIG. 2 and FIG. 4, the battery frame 56 includes an attachment portion 80 for attaching the power steering device 38. The attachment portion 80 is provided on a rear frame member (rear support portion) 65 of the battery frame 56. The attachment portion 80 has a pair of left and right attachment plates 81 formed in a substantially triangular shape in a side view.

One side located at the front end of each attachment plate 81 is disposed substantially along the vertical direction and fixed to the rear frame member 65. The other side located at the upper end of the attachment plate 81 is disposed at a position slightly higher than the battery 26 in a substantially horizontal posture. Still another side of the attachment plate 81 is an oblique side extending obliquely rearward and upward (obliquely forward and downward), and constitutes a lower surface 80a of the attachment portion 80.

The lower surface 80a of the attachment portion 80 is disposed above the lower end of the battery frame 56 with a space therebetween. Thus, as illustrated in FIG. 2, a space S is formed below the attachment portion 80. This space S is further enlarged from below the battery frame 56 as the battery frame 56 is placed on the machine body frame 21 via the attachment frame 54.

An attachment hole 81a for attaching the power steering device 38 is formed at a rear end of each attachment plate 81. By inserting the power steering device 38 between the pair of attachment plates 81, and supporting the power steering device 38 by a support shaft 83 such as a bolt inserted into the attachment hole 81a, the power steering device 38 is attached to the attachment portion 80. The power steering device 38 is configured to be swingable back and forth with the support shaft 83 inserted into the attachment hole 81a as a fulcrum. This configuration achieves a tilt steering function that enables the steering wheel 37 to be positionally adjusted forward and backward.

As described above, since the attachment portion 80 of the power steering device 38 is provided in the battery frame 56, it is not necessary to raise a dedicated frame for attaching the power steering device 38 from the machine body frame 21. Thus, there is no need to secure a space for disposing the dedicated frame behind the battery 26, and the electric work vehicle 10 can be made compact in the front-rear direction.

Further, by providing the attachment portion 80 in the battery frame 56, the structure of the attachment portion 80 itself can be simplified and the weight can be reduced. The battery 26 is heavier than an engine in a conventional engine-driven work vehicle (tractor). Thus, by reducing the weight of the attachment portion 80, the weight balance in the front-rear direction of the electric work vehicle 10 can be appropriately achieved similarly to the engine-driven work vehicle.

The space S formed below the attachment portion 80 can secure a wide space around the driver's foot, can be used as an arrangement space for other parts, or can be used as a work space for piping and wiring.

As illustrated in FIG. 2, a mount table 85 is provided on an upper surface 80b of the attachment portion 80 (attachment plate 81). The mount table 85 is made of a substantially horizontal plate material. An attachment portion (second attachment portion) 87 for attaching the meter panel 34 is provided on the mount table 85. The attachment portion 87 has an attachment surface 87a inclined so as to face obliquely upward and backward so that the meter panel 34 can be easily seen from the driver sitting on the driver's seat 31, and the meter panel 34 is attached to the attachment surface 87a.

By providing such an attachment portion 87 in the battery frame 56, it is not necessary to raise a dedicated frame for attaching the meter panel 34 from the machine body frame 21. Thus, there is no need to secure a space for disposing the dedicated frame behind the battery 26, and the electric work vehicle 10 can be made compact in the front-rear direction. Further, by providing the attachment portion 87 for the meter panel 34 in the attachment portion 80 for the power steering device 38, the configuration of the attachment portion 87 can be further simplified.

A partition plate 86 rising upward is provided at a front end of the mount table 85. The partition plate 86 is disposed with its plate surface facing the front-rear direction. In the present embodiment, the mount table 85 and the partition plate 86 are formed by bending one plate material into a substantially L shape in a side view. The partition plate 86 is disposed in front of the attachment portion 87 for the meter panel 34. The upper end of the partition plate 86 is disposed at a position higher than the attachment portion 87. The partition plate 86 is longer in the left-right direction than the mount table 85 and the battery frame 56. The partition plate 86 is disposed above the battery 26.

As illustrated in FIG. 2, a rear end of the hood 24 is detachably connected to the partition plate 86. The front end of the hood 24 is connected to the front end of the machine body frame 21 or the attachment frame 54 via a support shaft in the left-right direction so as to be swingable forward and backward, and the rear end thereof is connected to the partition plate 86 so that the hood can maintain the closed state. By removing the rear end of the hood 24 from the partition plate 86 and swinging the hood 24 forward, the battery 26 disposed inside the hood 24 can be exposed to the outside.

The partition plate 86 partitions the front end of the driving unit 13. That is, the partition plate 86 partitions the space in the hood 24 where the battery 26 is disposed and the driving unit 13. By providing such a partition plate 86 on the battery frame 56, it is not necessary to raise the partition plate from the machine body frame 21. Thus, there is no need to secure a space for disposing the partition plate behind the battery 26, and the electric work vehicle 10 can be made compact in the front-rear direction. Further, the configuration of the partition plate 86 can be simplified by providing the partition plate 86 on the attachment portion 80 for the power steering device 38.

The attachment portion 87 for the meter panel 34 and the partition plate 86 are both provided in the attachment portion 80 for the power steering device 38, and are integrally formed. Thus, when the attachment portions 80 and 87 and the partition plate 86 are assembled into one component, and the component is attached to the battery frame 56, manufacturing can be facilitated as compared with a case where the attachment portions 80 and 87 and the partition plate 86 are individually attached to the battery frame 56.

### (Other Embodiments)

The embodiment disclosed herein is illustrative in all respects and is not restrictive. The scope of rights of the present invention is not limited to the above-described embodiments, and includes all modifications within the scope equivalent to the configurations described in the claims.

For example, in the above embodiment, the battery frame 56 is provided with the attachment portion 87 of the meter panel 34, but the attachment portion 87 may be separate from the battery frame 56. Further, in the above embodiment, the battery frame 56 is provided with the partition plate 86, but the partition plate 86 may be provided separately from the battery frame 56.

### REFERENCE SIGNS LIST

- 10: electric work vehicle
- 11: vehicle body
- 13: driving unit
- 26: battery
- 34: meter panel
- 37: steering wheel
- 38: power steering device
- 56: battery frame
- 62: left frame member
- 63: right frame member
- 65: rear frame member (rear support portion)
- 69: buffer member
- 71: connection bolt (fixing member)
- 80: attachment portion
- 86: partition plate
- 87: attachment portion (second attachment portion)
- t: gap

## Claims

1. An electric work vehicle (10) comprising:
a vehicle body (11);
a driving unit (13) mounted on the vehicle body (11);
a battery (26) disposed in front of the driving unit (13); and
a battery frame (56) that supports the battery (26) and is mounted on the vehicle body (11), wherein
the driving unit (13) includes a steering wheel (37) and a power steering device (38) that is connected to the steering wheel (37) and configured to assist an operation of the steering wheel (37), and
the battery frame (56) includes an attachment portion (80) for mounting the power steering device (38).

2. The electric work vehicle (10) according to claim 1, wherein
the battery frame (56) includes a rear support portion (65) disposed on a rear side of the battery (26), and
the attachment portion (80) protrudes rearward from the rear support portion (65).

3. The electric work vehicle (10) according to claim 2, wherein the attachment portion (80) is located above a lower end of the battery frame (56).

4. The electric work vehicle (10) according to any one of claims 1 to 3, wherein
the driving unit (13) includes a meter panel (34), and
the battery frame (56) includes a second attachment portion (87) for attaching the meter panel (34).

5. The electric work vehicle (10) according to claim 4, wherein the second attachment portion (87) is provided above the attachment portion (80).

6. The electric work vehicle (10) according to any one of claims 1 to 5, wherein the battery frame (56) includes a partition plate (86) that partitions a front end of the driving unit (13).

7. The electric work vehicle (10) according to any one of claims 1 to 6, wherein the battery frame (56) includes a frame member facing a side surface of the battery (26) with a gap (t), and a buffer member (69) configured to be compressed by relative movement of the battery (26) and the frame member in a facing direction.

8. The electric work vehicle (10) according to claim 7, wherein
the buffer member (69) is disposed on an outer surface of the frame member, and
the battery frame (56) includes a fixing member (71) fixed to the battery (26) with the buffer member (69) sandwiched between the fixing member (71) and the frame member.
